# EUROPEAN PATENT APPLICATION

(11) **EP 3 881 942 A1**
(43) Date of publication of application: **22.09.2021**
(21) Application number: 20194143.2
(22) Date of filing: 02.09.2020
(51) Int. Cl.: B05D 1/00, A01N 25/34, A62B 18/02

(54) **PLASMA COATING TREATMENT METHOD FOR INHIBITING BIOLOGICAL PATHOGEN TRANSFER**

(30) Priority: 17.03.2020 EP 20163607
(71) Applicant: Molecular Plasma Group SA, 3895 Foetz (LU)
(72) Inventor: HEYBERGER, Régis, 57100 Thionville (FR); BOREK-DONTEN, Joanna, 6700 Arlon (BE); NISOL, Bernard, 1410 Waterloo (BE); LOPES, Maximilien, 5170 Bois-de-Villers (BE); SCHELTJENS, Gill, 2850 Boom (BE)
(74) Representative: IPLodge bv

(57) **Abstract**

The present invention concerns a method for providing a bio-active layer on a surface, comprising the steps of: a) ionizing a plasma gas at low temperature and at about atmospheric pressure, thereby creating a plasma; b) introducing a precursor into said plasma; c) exposing the surface to said plasma comprising said precursor, thereby forming a coating onto said surface, characterised in that the precursors comprise a biological pathogen transfer inhibiting compound.

## Description

### Technical field

The present invention concerns a method and apparatus for plasma coating of a surface, to modify biological properties of this surface, in particular to a layer capable of inactivating and/or immobilizing a biological pathogen. Use is made of an atmospheric low-temperature plasma process to form a thin coating on a surface. Hereby, the properties of the surface with respect to at least one biological pathogen are modified such that the surface is capable of destroying, inactivating and/or immobilizing the biological pathogen.

### Background of the invention

The current outbreak of the Sars-Cov-2 virus and Covid-19 disease show that there is need for a process which helps in preventing biological pathogens, in particular viruses, but also other biological pathogens such as bacteria, from spreading.

Many surfaces may come into contact with biological pathogens such as viruses or bacteria. This includes clothing, protective clothing, furniture, household equipment, door handles, but also many laboratory equipment, food and beverage containers, marine vessels, underwater construction, microfluidics chips, fluidized bed reactors, etc.

Document EP0859547B1 discloses reagents and methods for modifying a fabric substrate in order to inactivate viruses, and particularly lipid-enveloped viruses, upon contact. Such substrates can be modified by photochemically immobilizing hydrophilic polymers containing both quaternary ammonium groups and hydrocarbon chains, resulting in a localized surfactancy capable of disrupting lipid-enveloped viruses upon contact with the substrate. Substrates of the invention can be fabricated into the form of articles for medical and related use. This document relates to wet deposition, wherein a substrate is exposed to a solution containing the photopolymers.

Document WO2008127416A2 discloses hydrophobic polymeric coatings which can be non-covalently applied to solid surfaces such as metals, plastics, glass, polymers, textiles, and other substrates such as fabrics, gauze, bandages, tissues, and other fibers, in the same manner as paint, for example, by brushing, spraying, or dipping, to make the surfaces virucidal and bactericidal, have been developed. Also here, the coating is applied by a wet method.

The coating techniques described above make use of 'wet coating', whereby a surface is subjected to a liquid solution containing the coating material. Such wet coating techniques generally suffer from a number of drawbacks such as:
- a long drying time;
- large amount of waste resulting in a large stress on the environment;
- homogeneity and conformality of the coating is not always as desired,
- the thickness of the coating is not always under control, and may locally be much higher than desired,
- the coating may not penetrate a porous substrate enough.

Furthermore, it is seen that when a wet coating technique is used, post-rinsing is necessary and shows that a lot of the coating material still is rinsed away, i.e. much of the coating material is not well-adhered to the substrate. In the case a biocidal coating is envisioned, this may lead to unwanted health risks for users.

A coating technique which has gained momentum in the last few decades is plasma coating. Hereby a precursor which is to form the coating on the surface of a substrate is brought at least partially in a plasma state, and the surface of the substrate is subjected to the plasmized precursor. As a result, the precursor can form strong bonds with the substrate and/or form cross-links between substance molecules, thereby resulting in a coating which may be thin, yet very durable, homogeneous and conformal. If the precursor is a polymerizable monomer, polymerisation may occur directly onto the surface of the substrate.

Plasma coating techniques may be divided into vacuum techniques, which have an operating pressure that is significantly lower than atmospheric pressure, and into atmospheric techniques which operate at or near atmospheric pressure, for instance between 400 mbar and 1600 mbar, but preferably very close to atmospheric pressure e.g. between 950 mbar and 1050mbar. The present invention relates to an atmospheric plasma technique, which presents a number of advantages over vacuum plasma techniques, such as that no time-consuming depressurizing step is required and that both batch processing and inline processing, whereby the one or more objects which are to be treated, are sequentially treated, are easily achievable.

The present invention wants to improve on the above mentioned techniques to provide coatings to a surface to alter the surface's affinity to biological organisms and compounds, and this for high throughput applications. More specifically, the present invention focusses on providing a surface with a biological pathogen transfer inhibiting coating. A biological pathogen transfer inhibiting coating refers to a coating which at least partially, and preferably completely, inhibits the transfer of biological pathogens, e.g. biological organisms or biological compounds. The inhibition of transfer may be obtained by:
- inactivation of the biological pathogen, i.e. a biocidal coating,
- decreasing proliferation of the biological pathogen, i.e. a proliferation decreasing coating / biostatic coating,
- immobilisation of the biological pathogen, i.e. a bio-immobilisation coating.

In many cases, inactivation of the biological pathogen is preferred.

### Summary of the invention

The present invention concerns a method for providing a bio-active layer on a surface, comprising the steps of:
a) ionizing a plasma gas at low temperature and at about atmospheric pressure, thereby creating a plasma;
b) introducing a precursor into said plasma;
c) exposing the surface to said plasma comprising said precursor, thereby forming a coating onto said surface.

Hereby, the precursors comprise a biological pathogen transfer inhibiting compound, which preferably is a biological pathogen inactivation compound, a biological pathogen immobilisation compound and/or a biological pathogen proliferation decreasing compound.

The present invention also concerns a surface comprising a biological pathogen transfer inhibiting layer obtained using a method according to the present invention.

Hereby, a biological pathogen inactivation compound is capable of inactivating the pathogen. Preferred embodiments of such inactivation compounds are a biocidal compound, a virucidal compound and/or a bactericidal compound.

In a preferred embodiment of the method, the precursors comprise a biocide compound, more preferably any compound or any combination of compounds in the table below, wherein the structure is shown for easy reference:

| Biocide name | Cas number | Structure |
|---|---|---|
| .alpha.,.alpha.',.alpha."-trimethyl-1,3,5-triazine-1,3,5(2H,4H,6H)triethanol (HPT) | 25254-50-6 | 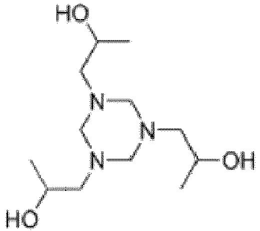 |
| Propan-1-ol | 71-23-8 | 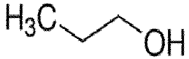 |
| Propan-2-ol | 67-63-0 | 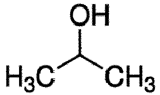 |
| 2-Phenoxyethanol | 122-99-6 | 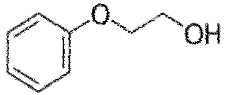 |
| Biphenyl-2-ol | 90-43-7 | 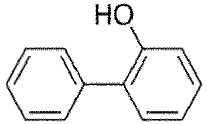 |
| Chlorocresol | 59-50-7 | 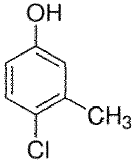 |
| Clorophene | 120-32-1 | 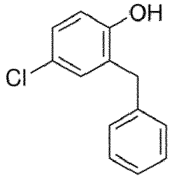 |
| 5-chloro-2-(4-chlorphenoxy)phenol (DCPP) | 3380-30-1 | 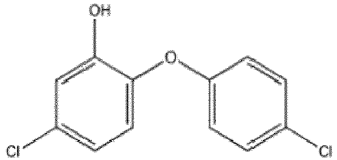 |
| D-gluconic acid, compound with N,N"-bis(4-chlorophenyl)-3,12-diimino2,4,11,13-tetraazatetradecanediamidine (2:1) (CHDG) | 242-354-0 | 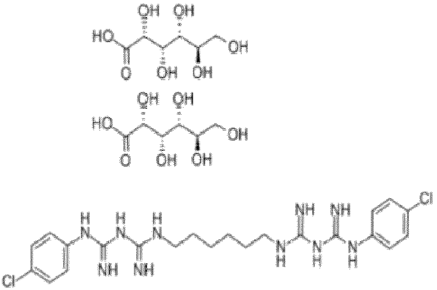 |
| 6-(phthalimido)peroxyhexanoic acid (PAP) | 128275-31-0 | 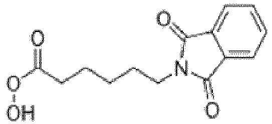 |
| Citric Acid | 77-92-9 | 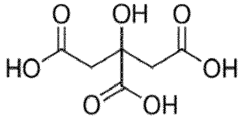 |
| Formic Acid | 64-18-6 | 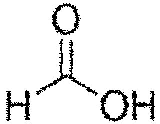 |
| Glycollic Acid | 79-14-1 | 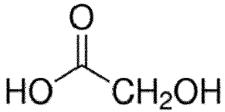 |
| L-(+)-lactic acid | 79-33-4 | 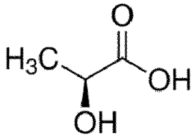 |
| Peracetic acid | 79-21-0 | 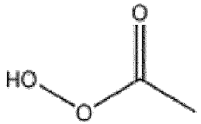 |
| Salicylic Acid | 69-72-7 | 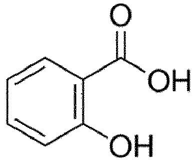 |
| Nonanoic Acid | 112-05-0 | 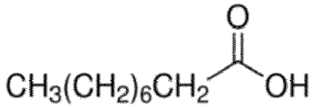 |
| Alkyl (C12-18) dimethylbenzyl ammonium chloride (ADBAC (C12-18)) | 68391-01-5 | 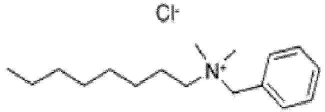 |
| Alkyl (C12-C14) ethylbenzylammonium chloride (ADEBAC (C12-C14)) | 85409-23-0 | 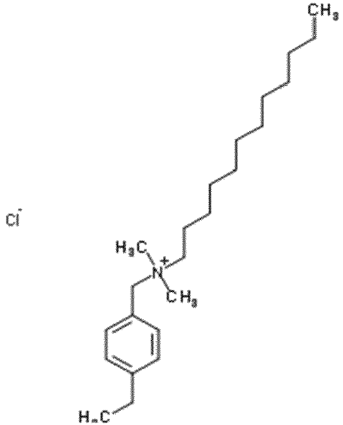 |
| Didecyldimethylammonium chloride (DDAC) | 7173-51-5 | 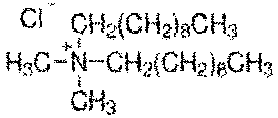 |
| Dimethyloctadecyl[3-(trimethoxysilyl)propyl] ammonium chloride (SiQAM) | 27668-52-6 | 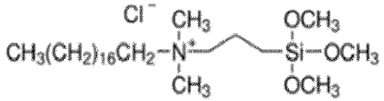 |
| Quaternary ammonium compounds, benzyl-C12-18-alkyldimethyl, salts with 1,2-benzisothiazol-3(2H)-one 1,1-dioxide (1:1) (ADBAS) | 68989-01-5 | 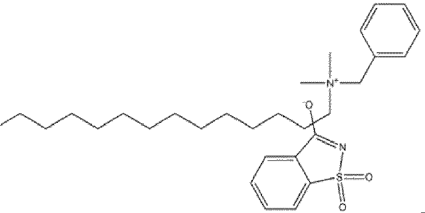 |
| N-(3-aminopropyl)-N-dodecylpropane-1,3-diamine (Diamine) | 2372-82-9 | 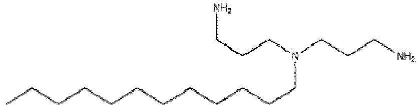 |
| Gluteraldehyde | 111-30-8 | 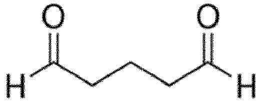 |
| Glyoxal | 107-22-2 | 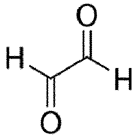 |
| Cinnamaldehyde / 3-phenyl-propen-2-al (Cinnamic aldehyde) | 104-55-2 | 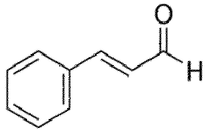 |
| Sodium dichloroisocyanurate dihydrate | 51580-86-0 | 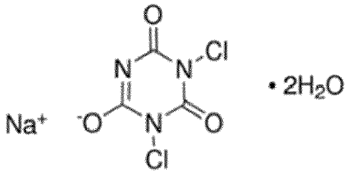 |
| Sodium N-chlorobenzenesulphonamide (Chloramine-B) | 127-52-6 | 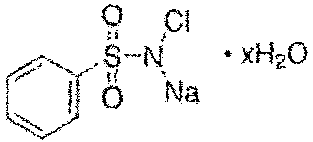 |
| Symclosene | 87-90-1 | 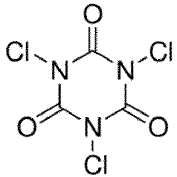 |
| Bromochloro-5,5-dimethylimidazolidine-2,4-dione (BCDMH/ Bromochlorodimethylhydantoi n) | 32718-18-6 | 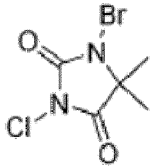 |
| Tosylchloramide sodium (Tosylchloramide sodium - Chloramin T) | 127-65-1 | 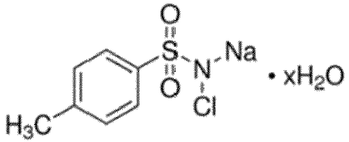 |
| Troclosene sodium | 2893-78-9 | 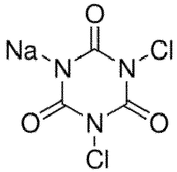 |
| Mixture of 5-chloro-2-methyl-2H-isothiazol-3-one (EINECS 247-500-7) and 2-methyl-2H-isothiazol-3-one (EINECS 220-239-6) (Mixture of CMIT/MIT) | 55965-84-9 | 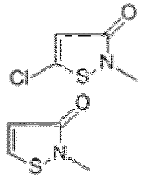 |
| Monolinuron | 1746-81-2 | 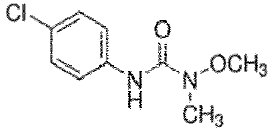 |
| Penta potassium bis(peroxymonosulphate) bis(sulphate | 70693-62-8 | KHSO₅ • ½KHSO₄ • ½K₂SO₄ |
| Pyridine-2-thiol 1-oxide, sodium salt (Sodium pyrithione) | 3811-73-2 | 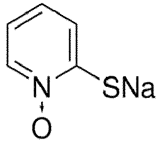 |
| Bronopol | 52-51-7 | 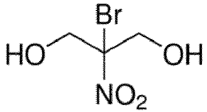 |
| Copper | 7440-50-8 | |
| 1,2-benzisothiazol-3(2H)-one (BIT) | 2634-33-5 | 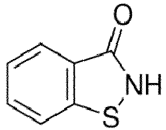 |
| 3,3'-methylenebis[5-methyloxazolidine] (Oxazolidin/MBO) | 66204-44-2 | 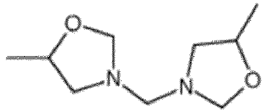 |
| Amines, N-C10-16-alkyltrimethylenedi-, reaction products with chloroacetic acid (Ampholyt 20) | 139734-65-9 | |

Virucidal precursors are chemical substances such as individual compounds or compositions, attacking and inactivating, i.e. at least partially decreasing the infectivity of, the extracellular viral particles (virions). In many cases, virucidals (i) damage the virion protein capsid or supercapsidal membrane (when this shell is broken, there is no way for the virus to inject the material into the host cell), or (ii) penetrate into the virion and destroy the viral genome so that it can no longer replicate itself in the host. The viral particle integrity could also be affected.

In a preferred embodiment, the precursors comprise a virucidal compound, more preferably the precursors comprise any or any combination of the compounds in the table below:

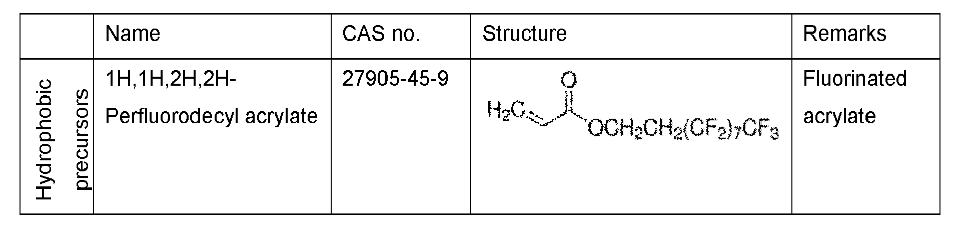

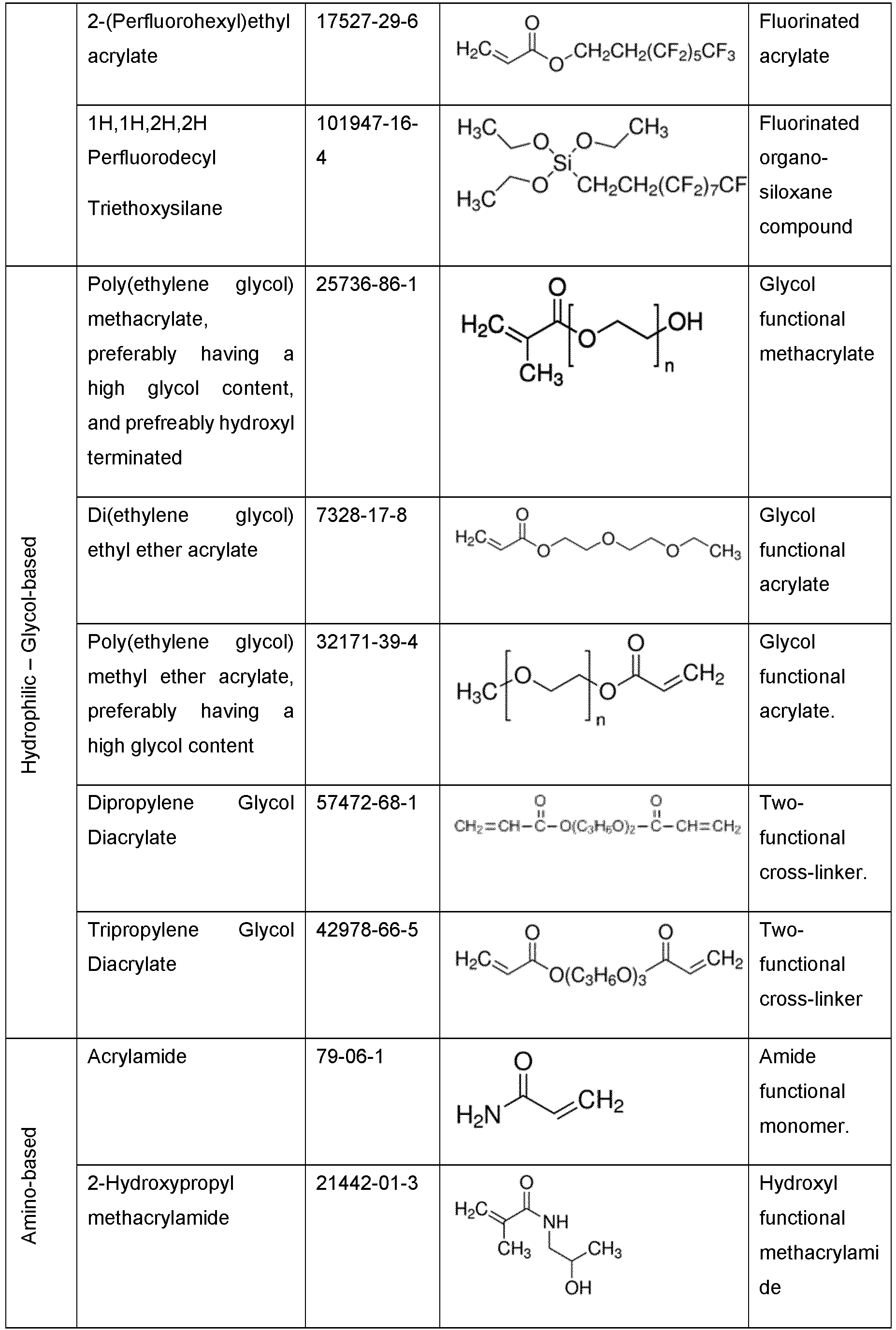

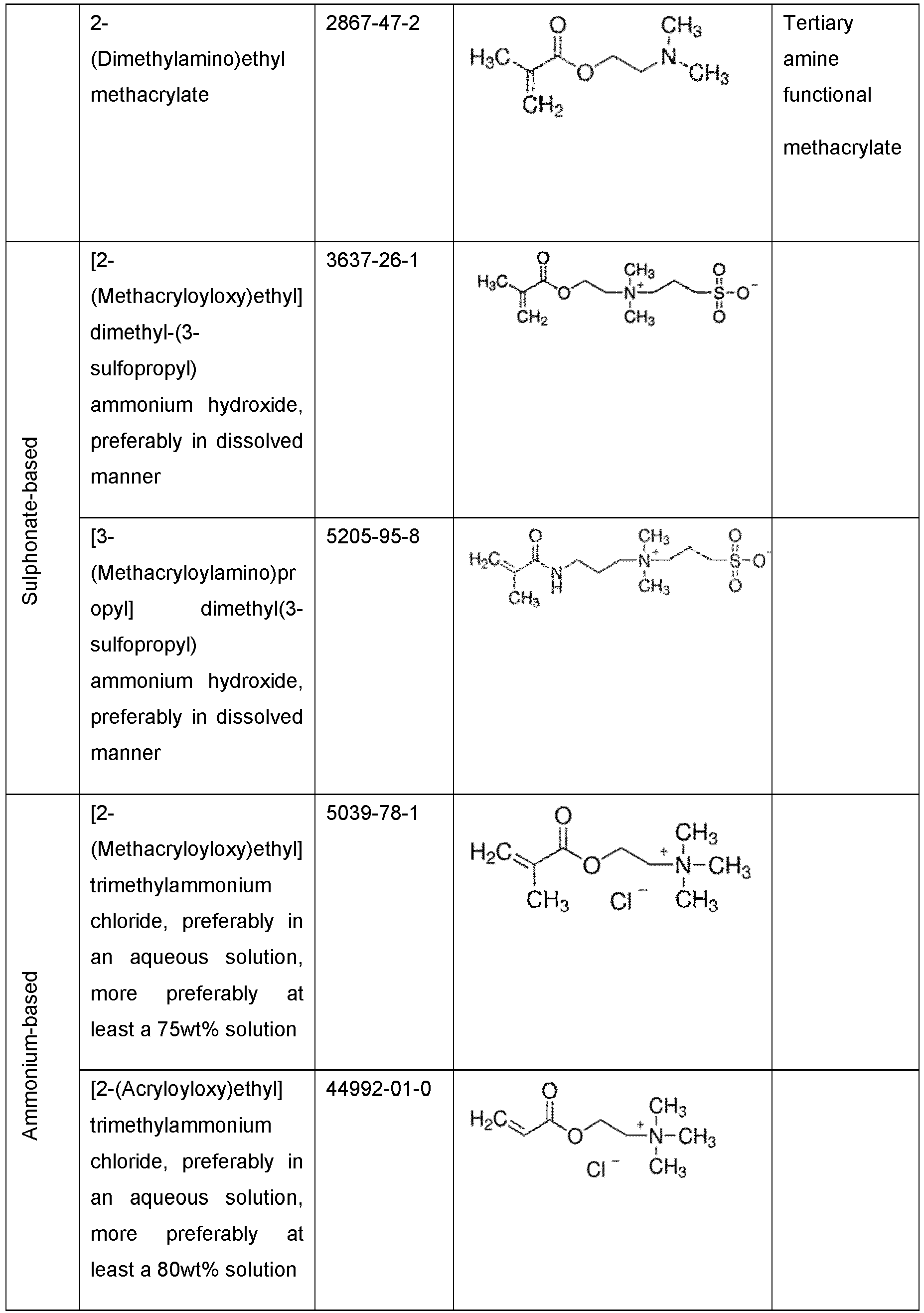

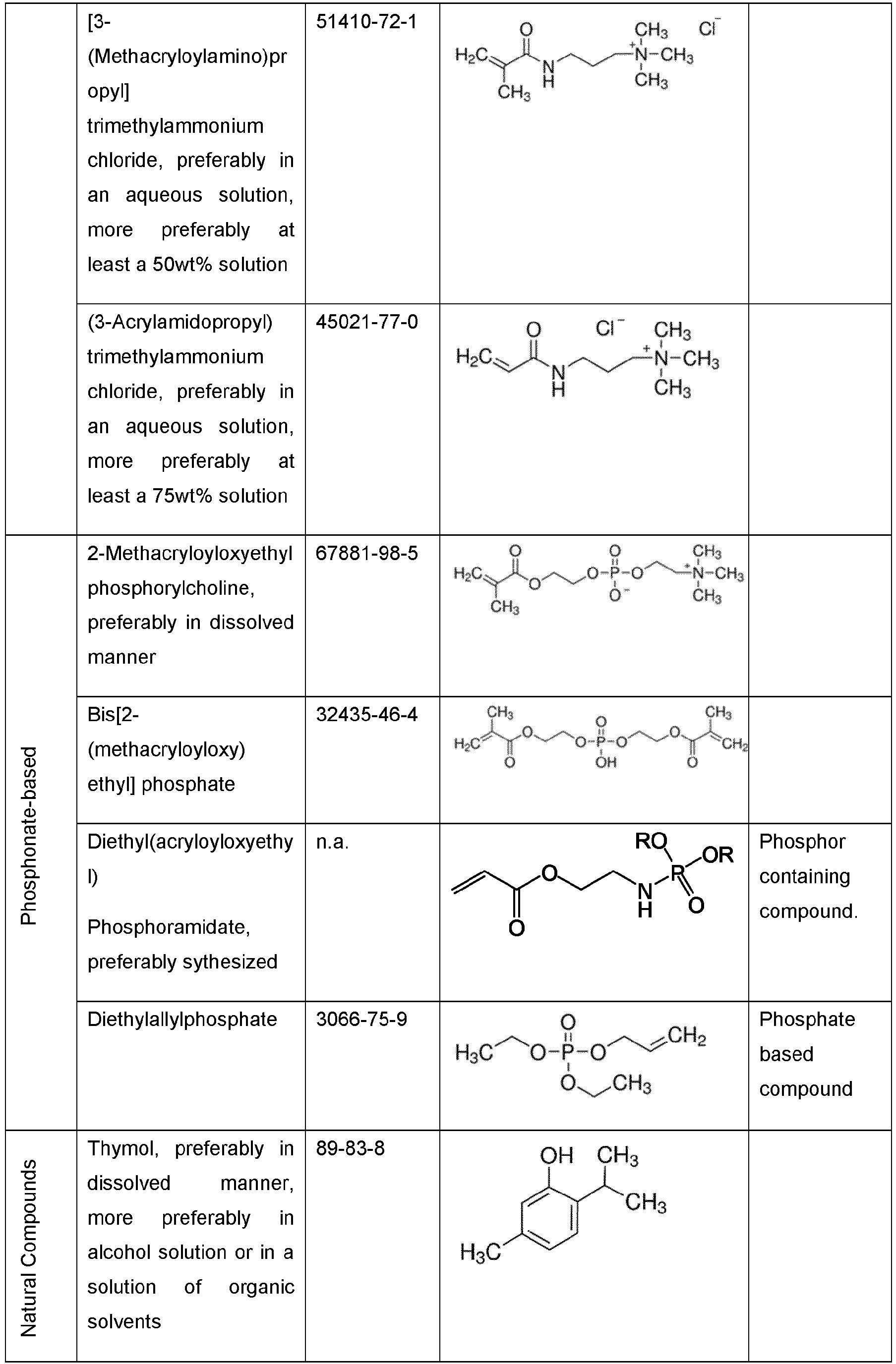

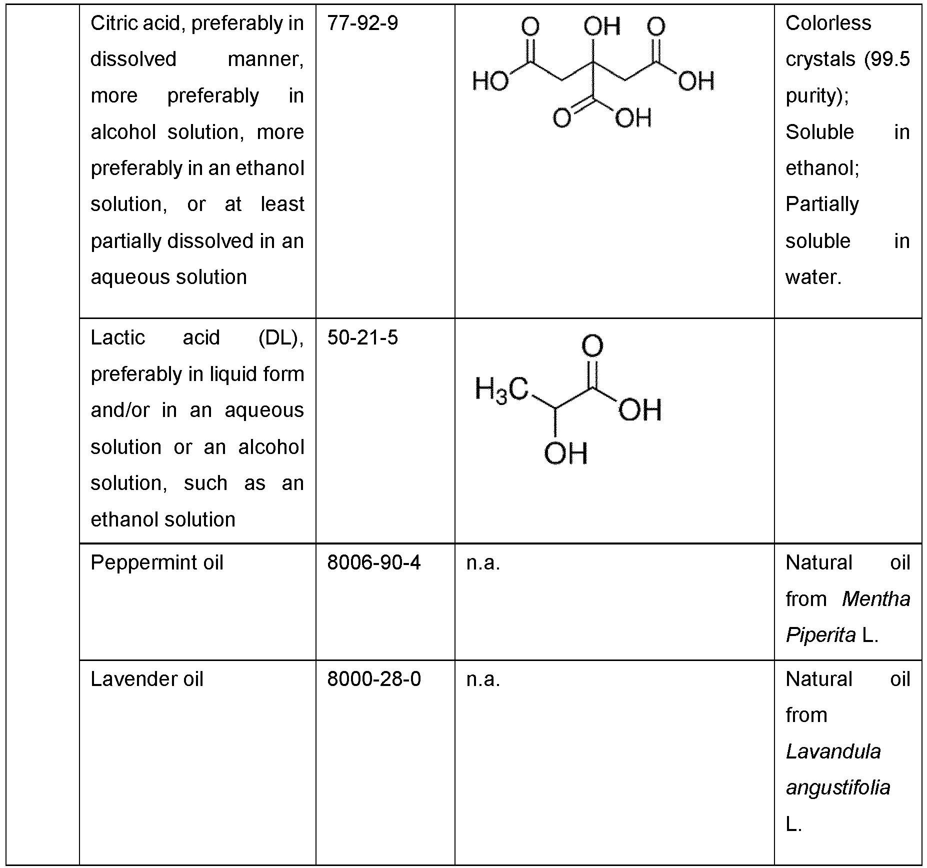

In a particularly preferred embodiment, the precursors comprise citric acid. Citric acid may come in the form of colorless crystals of preferably 99.5 purity. In such case and in other cases, it is preferred to dissolve the citric acid, preferably in an aqueous solution

In an embodiment of the invention, inorganic, metallic or metallic oxide particles are co-injected with the precursors into the plasma.

In an embodiment, the precursors comprise antibiotics and/or peptides.

In a preferred embodiment, the precursors comprise Hydantoin (with CAS no. 461-72-3) or hydantoin derivatives.

The precursors preferably comprise any or any combination of the following compounds:
.alpha.,.alpha.',.alpha."-trimethyl-1,3,5-triazine-1,3,5(2H,4H,6H)triethanol (HPT),
Propan-1-ol, Propan-2-ol, 2-Phenoxyethanol, Biphenyl-2-ol, Chlorocresol, Clorophene, 5-chloro-2-(4-chlorphenoxy)phenol (DCPP),
D-gluconic acid, compound with N,N"-bis(4-chlorophenyl)-3,12-diimino2,4,11,13-tetraazatetradecanediamidine (2:1) (CHDG),
6-(phthalimido)peroxyhexanoic acid (PAP),
Citric Acid, Formic Acid, Glycollic Acid, L-(+)-lactic acid, Peracetic acid, Salicylic Acid, Nonanoic Acid,
Alkyl (C12-18) dimethylbenzyl ammonium chloride (ADBAC (C12-18)),
Alkyl (C12-C14) ethylbenzylammonium chloride (ADEBAC (C12-C14)),
Didecyldimethylammonium chloride (DDAC),
Dimethyloctadecyl[3-(trimethoxysilyl)propyl] ammonium chloride,
Quaternary ammonium compounds, benzyl-C12-18-alkyldimethyl, salts with 1,2-benzisothiazol-3(2H)-one 1,1-dioxide (1:1) (ADBAS),
N-(3-aminopropyl)-N-dodecylpropane-1,3-diamine (Diamine),
Gluteraldehyde, Glyoxal, Cinnamaldehyde, 3-phenyl-propen-2-al (Cinnamic aldehyde), Sodium dichloroisocyanurate dihydrate, Sodium N-chlorobenzenesulphonamide (Chloramine-B), Symclosene,
Bromochloro-5,5-dimethylimidazolidine-2,4-dione (BCDMH/ Bromochlorodimethylhydantoin),
Tosylchloramide sodium (Tosylchloramide sodium - Chloramin T), Troclosene sodium,
Mixture of 5-chloro-2-methyl-2H-isothiazol-3-one (EINECS 247-500-7) and 2-methyl-2H-isothiazol-3-one (EINECS 220-239-6) (Mixture of CMIT/MIT),
Monolinuron,
Pentapotassium bis(peroxymonosulphate) bis(sulphate),
Pyridine-2-thiol 1-oxide, sodium salt (Sodium pyrithione),
Bronopol, Copper, 1,2-benzisothiazol-3(2H)-one (BIT),
3,3'-methylenebis[5-methyloxazolidine] (Oxazolidin/MBO),
Amines, N-C10-16-alkyltrimethylenedi-, reaction products with chloroacetic acid (Ampholyt 20).

In a particularly preferred embodiment, the precursors comprise citric acid. The above precursors, and particularly citric acid, are preferably used as a biological pathogen inactivation compound and are thus preferred in case a biocidal layer is desired.

Additionally or alternatively, the precursors may comprise a hydrophobic precursor, a hydrophilic glycol-based precursor, an amino-based precursor, a sulphonate-based precursor, an ammonium-based precursor, a phosphonate-based precursor, a natural compound or any combination thereof. More preferably, the precursors may comprise any or any combination of the following compounds:
1H, 1H,2H,2H-Perfluorodecyl acrylate, 2-(Perfluorohexyl)ethyl acrylate,
1H, 1H,2H,2H Perfluorodecyl,
Triethoxysilane,
Poly(ethylene glycol) methacrylate, preferably having a high glycol content, and preferably hydroxyl terminated,
Di(ethylene glycol) ethyl ether acrylate,
Poly(ethylene glycol) methyl ether acrylate, preferably having a high glycol content,
Dipropylene Glycol Diacrylate,
Tripropylene Glycol Diacrylate,
Acrylamide,
2-Hydroxypropyl methacrylamide,
2-(Dimethylamino)ethyl methacrylate,
[2-(Methacryloyloxy)ethyl] dimethyl-(3-sulfopropyl) ammonium hydroxide, preferably in dissolved manner,
[3-(Methacryloylamino)propyl] dimethyl(3-sulfopropyl) ammonium hydroxide, preferably in dissolved manner,
[2-(Methacryloyloxy)ethyl] trimethylammonium chloride, preferably in an aqueous solution, more preferably at least a 75wt% solution,
[2-(Acryloyloxy)ethyl] trimethylammonium chloride, preferably in an aqueous solution, more preferably at least a 80wt% solution,
[3-(Methacryloylamino)propyl] trimethylammonium chloride, preferably in an aqueous solution, more preferably at least a 50wt% solution,
(3-Acrylamidopropyl) trimethylammonium chloride, preferably in an aqueous solution, more preferably at least a 75wt% solution,
2-Methacryloyloxyethyl phosphorylcholine, preferably in dissolved manner, Bis[2-(methacryloyloxy) ethyl] phosphate,
Diethyl(acryloyloxyethyl),
Phosphoramidate, preferably synthesized,
Diethylallylphosphate,
Thymol, preferably in dissolved manner, more preferably in alcohol solution or in a solution of organic solvents,
Citric acid, preferably in dissolved manner, more preferably in alcohol solution, more preferably in an ethanol solution, or at least partially dissolved in an aqueous solution,
Lactic acid (DL), preferably in liquid form and/or in an aqueous solution or an alcohol solution, such as an ethanol solution.

These precursors are preferably used as a biological pathogen inactivation compound wherein the biological pathogen is a virus, and thus in case a virucidal layer is desired.

In a preferred embodiment, the precursors comprise a halogen-containing compound, more preferably a halogen-leaching compound which is capable of leaching its halogen when present in the bio-active layer of the present invention. Preferably the compound comprises chlorine, fluorine, bromine and/or iodine. Particularly preferred are halogenated Hydantoin or hydantoin-based compounds such as preferably 1-Bromo-3-chloro-5,5-dimethylhydantoin (also called BCDMH or bromochlorodimethylhydantoin, with CAS no. 16079-88-2). Without wishing to be bound by theory, it is expected that a biological pathogen coming into contact with a bio-active layer which leaches halogens, could be inactivated.

In a preferred embodiment, the precursors comprise succinimide or succinimide-based compounds. Succinimide (CAS no.: 123-56-8) has structural formula:

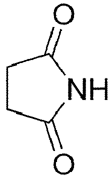

Succinimide and succinimide-based compounds are particularly preferred as biological pathogen immobilisation compounds.

In an embodiment, the precursors comprise any of the following:
- an organo-siloxane with a pathogen functional group;
- a polymerizable compound with a functional group, whereby preferably said polymerizable compound is an acrylate, a methacrylate or a vinyl, and/or
- a saturated compound with a functional group,
wherein the functional group is a biological pathogen transfer inhibiting functional group, which may be a fluorinated functional group, a glycol-based functional group, and amine group, a sulphonate-based functional group, an ammonium-based functional group or a phosphonate-based functional group. Preferably hereby, the amine group may be a primary amine group, a secondary amine group or a tertiary amine group. In a preferred embodiment, the precursors comprise FPDA and/or BUTAMA.

The present method also concerns particular uses:
- use of the method for inactivating biological pathogens on the surface of a substrate, whereby the precursors preferably comprise biocidal compounds and/or virucidal compounds,
- use of the method for decreasing proliferation of microbial material adherent to the surface, whereby the precursors preferably comprise amine, siloxane, sulphonate, ammonium, phosphonate, quaternary ammonium, metal nanoparticles, enzyme, surfactant, peptide, lipopeptide or any combination thereof, and
- use of the method for collecting microbial material on the surface, whereby the precursors preferably comprise chitosan.

These specific effects for the different precursors are summarized the table below:

| **Function** | **Precursor type** | **Tested precursors** |
|---|---|---|
| Inhibiting proliferation of microbial material that adheres to the surface | Amines, siloxanes, sulphonate, ammonium, phosphonate, metal nanoparticles (e.g. Au, Ag, Cu), enzymes, surfactants, peptides, lipopeptides, quarternary ammonium | BUTAMA, DIMAEMA |
| Having the capacity to destroy or inactivate viruses upon contact with the surface | Amines, siloxanes, sulphonate, ammonium, phosphonate, metal nanoparticles (e.g. Au, Ag, Cu), enzymes, surfactants, peptides, lipopeptides, quaternary ammonium | |
| Microbe collecting | Chitosan, | Chitosan solution |

In the table above, abbreviations have been used for at least the following chemical compounds: 2-(tert-butylamino)ethyl methacrylate (BUTAMA), 2-(Dimethylamino)ethyl methacrylate (DIMAEMA). Note that the tested precursors in the table above are not limited to those that have been mentioned. Other precursors have been tested, some of which are discussed in more detail elsewhere in the present document.

In an embodiment, the precursors comprise hydroxyl (alcohols), carboxyl (acids), aldehyde, amine, glycol, fluorocarbon, siloxane, quaternary ammonium, sulphonate, ammonium, phosphonate, halogens, natural oils, metals (metallic nanoparticles), metal oxides, inorganic particles, salts, enzyme, surfactant, peptide, lipopeptide, chitosan, antibiotics or any combination thereof.

In an embodiment of the present invention, the biological pathogen transfer inhibiting compound is a biological pathogen proliferation decreasing compound, preferably a microbial proliferation decreasing compound. The method of the present invention can then be used to decrease proliferation of microbial material adherent to the surface. Preferably hereby, the precursors comprise amine, siloxane, sulphonate, ammonium, phosphonate, quaternary ammonium, metal nanoparticles, enzyme, surfactant, peptide, lipopeptide or any combination thereof.

In an embodiment of the present invention, the biological pathogen transfer inhibiting compound is a biological pathogen immobilisation compound, preferably a microbial collecting compound. The method of the present invention can then be used for collecting microbial material on the surface. Preferably hereby, the precursors comprise chitosan.

The present applicants have found that the abovementioned precursors significantly alter the surface properties with respect to biological organisms and compounds. More particularly, the precursors are compounds which allow at least partial inhibition of transference of a biological pathogen which come into contact with a surface provided with a layer deposited thereon using the method of the present invention. As indicated above, the at least partial inhibition of transference of the biological pathogen could be obtained in a manner of ways, depending on the compound used as a precursor. At least three possible effects can be used to inhibit transfer of a biological pathogen.

Note that in the context of the present document, the term "inhibiting" includes a partial inhibition, in the sense that transfer of the biological pathogen is incomplete or slowed down. Preferably a complete inhibition of transfer is obtained.

In the context of the present document, the term "bio-active layer" refers to a thin, at least partially covering of a substrate's surface. The layer may cover the full surface, but a partial covering can also be preferred. The terms "coating" and "coating layer" are used synonymously to "layer" in the present document.

The atmospheric low-temperature plasma coating technique, whereby the precursors are inserted into the plasma, and the surface is exposed to resulting plasma, can be applied at a high throughput rate, while still allowing for a very smooth, thin coating. The plasma technique also allows treatment of surfaces having a large range of shapes and sizes.

Plasma techniques to deposit a thin layer on a surface have been applied previously. The present applicant and inventors have previously filed patent applications on this subject.

Document WO2019243631A1 discloses a method for plasma coating an object comprising an object profile, comprising the steps of: a) manufacturing a replaceable shield comprising a jet inlet, a nozzle outlet and a sidewall extending from the jet inlet to the nozzle outlet, wherein the nozzle outlet comprises an edge essentially congruent to at least part of the object profile; b) detachably attaching the replaceable shield to a jet outlet of a plasma jet generator; c) placing the object at the nozzle outlet such that the object profile fits closely to the nozzle outlet edge, thereby minimizing a gap between the nozzle outlet and the object; d) plasma coating the object with a low-temperature, oxygen-free plasma at an operating pressure which is higher than the atmospheric pressure, preferably by at most 10%, by providing a plasma jet in the shield via the plasma jet generator and injecting coating precursors in the plasma jet in the shield, thereby creating said operating pressure, thereby plasma coating the object in an oxygen-depleted plasma zone.

Document WO2019038378A1 discloses a method for depositing a coating on a substrate. A first precursor comprising fluoro-acrylate monomers, fluoro-alkyl acrylate monomers, fluoro-methacrylate monomers, fluoro-alkyl methacrylate monomers, fluoro-silane monomers, or a combination or derivates thereof is provided. A second precursor comprising linear siloxanes, silane monomers, cyclosiloxanes, cyclosilane monomers, or a combination or derivates thereof is provided. The first and second precursors are co-injected in a treatment region. An atmospheric or reduced pressure plasma discharge is created in said treatment region. The substrate coating comprises alternated multi-stacked nanostructures and is formed by copolymerization of the first and second precursors.

These documents describe a number of plasma techniques for depositing a layer onto a surface by producing a, preferably oxygen-poor or oxygen-free, plasma stream and by introducing a monomer precursor in the plasma stream. The plasma stream is then directed onto the surface to be treated. Hereby a polymerisation of the monomer directly onto the surface takes place. The technique makes use of low-temperature plasma, typically between 0 °C and 100°C, and preferably at room temperature. The plasma is also applied at or around atmospheric pressure, which is drastically faster than vacuum pressure plasma techniques. The plasma pressure is slightly higher than ambient pressure in order to ensure a directed plasma stream and to ensure that oxygen present in the surrounding air is evacuated from the surface at the time of treatment.

### Brief discussion of the figures

Figure 1: at t=t0 the plasma is on. A precursor R-X is added to the plasma gas and the plasma is contacted with the substrate. Hereby the precursor R-X is radicalized, and the substrate is activated.
Figure 2: at t=t1 the plasma is on. Radical recombination reactions are taking place on the surface, resulting in a covalent bond between substrate and precursor.
Figure 3: at t=t2, the plasma is on. Film growth and thickness depend on treatment time. Also cross-linking is taking place.
Figure 4: at t=t3 the plasma is off. After the plasma treatment, a functional plasma deposited film remains which is grafted onto the substrate.

### Detailed description of the invention

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation. The expression "% by volume", "volume percent", "%vol" or "vol%", here and throughout the description unless otherwise defined, refers to the relative volume of the respective component based on the overall volume of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, 25 ≥6 or ≥7 etc. of said members, and up to all said members.

As used herein, the term antimicrobial refers to decreasing proliferation of microbial material, in particular viral and/or bacterial material, that may be present on a surface.

As used herein, the terms antiviral and virucidal refer to the capacity to destroy or inactivate viruses upon contact.

As used herein, the term aerosol refers to a suspension of fine solid particles or liquid droplets, in air or in another gas.

The term "biological pathogen" refers to a biological organism or compound which can produce disease. A pathogen may also be referred to as an infectious agent, or simply a germ. Preferably, the biological pathogen is a virus, a bacterium, a protozoan, a prion, a viroid, or a fungus. In a particularly preferred embodiment, the biological pathogen is a virus. In a preferred embodiment, inactivation of the biological pathogen is preferred.

A viral envelope is the outermost layer of many types of viruses. It protects the genetic material in their life-cycle when traveling between host cells. Not all viruses have envelopes. In an embodiment of the present invention, the biological pathogen is a lipid enveloped virus or a non-lipid-enveloped virus, preferably a lipid-enveloped virus.

Envelopes are typically derived from portions of the host cell membranes (phospholipids and proteins), but include some viral glycoproteins. They may help viruses avoid the host immune system. Glycoproteins on the surface of the envelope serve to identify and bind to receptor sites on the host's membrane. The viral envelope then fuses with the host's membrane, allowing the capsid and viral genome to enter and infect the host.

Some enveloped viruses also have a capsid, another protein layer, between the envelope and the genome.

The cell from which a virus buds often dies or is weakened, and sheds more viral particles for an extended period. The lipid bilayer envelope of these viruses is relatively sensitive to desiccation, heat, and detergents, therefore these viruses are easierto sterilize than non-enveloped viruses, have limited survival outside host environments, and typically must transfer directly from host to host. Enveloped viruses possess great adaptability and can change in a short time in order to evade the immune system. Enveloped viruses can cause persistent infections.

Examples of enveloped viruses:
- DNA viruses: Herpesviruses, Poxviruses, Hepadnaviruses, Asfarviridae
- RNA viruses: Flavivirus, Alphavirus, Togavirus, Coronavirus, Hepatitis D, Orthomyxovirus, Paramyxovirus, Rhabdovirus[2], Bunyavirus, Filovirus
- Retroviruses

The term "virus" according to the present invention includes double-stranded or single-stranded RNA or DNA viruses, which infect cells of bacteria, plants and/or animals. These include viruses from the following families of viruses: Iridoviridae, African swine fever virus, Poxyiridae, Parvoviridae, Reoviridae, Birnaviridae, Picornaviridae, Togaviridae, Flaviviridae, Rhabdoviridae, Bunyaviridae, Herpesviridae, Adenoviridae, Papovaviridae, Hepadnaviridae, Coronaviridae, Calicivirus, Arenaviridae, Paramyxoviridae, Orthomyxoviridae, Filoviridae, Retroviridae, Baculoviridae, Polydnaviridae, Nudaurelia (3 virus group, Nodaviridae, Caulimovirus, Geminivirus, Tomato spotted wilt virus group, Luteovirus, Machlovirus, Necrovirus, Sobemovirus, Tombusvirus, Tymovirus, Bromovirus, Cucumovirus, Ilarvirus, Alfafa mosaic virus group, Comovirus, Dianthovirus, Nepovirus, Pea enation mosaic virus group, Tobamovirus, Tobravirus, Hordeivirus, Potexvirus, Potyvirus, Carlavirus, Closterovirus, Totiviridae, Partitiviridae, Myoviridae, Styloviridae, Podoviridae, Tectiviridae, Plasmaviridae, Corticoviridae, Microviridae, Inoviridae, Cystoviridae and Leviviridae. In a preferred embodiment, the biological pathogen is a pathogen which infects human cells.

It should be understood that a virus may include viruses or infectious agents, which do not fall into the above mentioned families, e.g., plant satellite viruses, prions, baculoviruses and bacteriophage respectively.

The term "bacteriophage" according to the present invention is indicative of bacteriophage, which infect specific strains of bacteria e.g. salmonella, Escherichia coli, staphylococcus or pseudomonus bacteriophage. In an embodiment, the biological pathogen is a bacteriophage.

As indicated above, the present invention relates to a method for providing a bio-active layer on a surface, comprising the steps of:
a) ionizing a plasma gas at low temperature and at about atmospheric pressure, thereby creating a plasma;
b) introducing a precursor into said plasma;
c) exposing the surface to said plasma comprising said precursor, thereby forming a coating onto said surface,
wherein the precursors comprise a biological pathogen transfer inhibiting compound. As a result, the bio-active layer is a biological pathogen transfer inhibiting layer. The present invention is extremely apt at ensuring that the biological pathogen transfer inhibiting functionality of the compound is maintained in the process of depositing the layer. This is because the plasma gas can be applied at standard conditions of temperature and pressure, e.g. at or around room temperature and at or around atmospheric pressure, and because the precursor is introduced into the plasma, rather than being plasmized directly, i.e. the precursor is mainly indirectly excited through collisions with plasma species. This type of excitation decreases the risk of fragmentation of the precursor or any other possible cause of functionality loss.

It is important to realize that the substrates onto which the bio-active layer is deposited can have any type of shape and size, and can be difficult to treat, due to their inert nature or their extreme fragility, e.g. natural materials, biodegradable or water soluble materials. However, the method of the present invention is remarkably gentle and can be used on a multitude of materials, such as preferably any or any combination of the following:
- Polymers, which can be used in substrates such as preferably any of the following:
   - Commodities (e.g. PE, PP, PVC, PS, EPDM, polyolefins...)
   - Engineering thermoplastics (e.g. PET, PBT, PMMA, PC, PES, polyamides, aramides, Acrylonitrile styrene acrylate (ASA), acrylonitrile butadiene styrene (ABS),...)
   - Fluorinated polymers (e.g. PTFE, PVDF, Fluorinated ethylene propylene (FEP),...)
   - Biodegradable polymers (e.g. PLA, PCL,...)
   - Cross-linked polymers (e.g. epoxy-amines, polyurethanes, silicones,...)
   - Carbon fibres
   - Water soluble polymers (PEG, polyvinyl pyrrolidone (PVP), polyvinyl alcohol (PVA), polyacrylic acid (PAA), polyacrylamides, divinyl ether-maleic anhydride (DIVEMA), polyoxazoline, polyphosphates, polyphosphazenes,...)
- Natural materials, such as preferably rayon or viscose, polysaccharides, chitosan, collagen, proteins, xanthan gum, pectins, dextran, carrageenan, guar gum, hyaluronic acid (HA), leather and/or cellulosic materials such as paper materials
- Metals, such as preferably comprising any or any combination of iron, brass, lead, iron, tin, stainless steel, aluminium, zinc, titanium, gold, silver, copper and all possible alloys thereof
- Inorganic materials such as preferably glass, silicon wafers, metal oxides (e.g. Al2O3, ZnO), carbides (e.g. SiC, titanium carbide), nitrides (e.g. Si3N4)

The method of the present invention is preferably applied to a surface of any of the following substrates:
- a membrane and/or a filtration system, more preferably a submersed membrane and/or a submersed filtration system, which may be used in desalination plants or water recycling plant;
- a filtration membrane, whereby an antibacterial and/or antiviral layer helps to avoid fouling of the membrane and/or bacterial contamination;
- a water cooling line, which can be used in industrial production systems, in household equipment, in radiators, in computer cooling systems, preferably high-end computer water cooling systems;
- a drain pipe and/or a sewage system, whereby an antibacterial and/or antiviral layer helps in reducing contamination;
- a dispenser pipe and/or a dispensertap, e.g. for liquids, whereby antibacterial and/or antiviral layer helps to avoid cross contamination of nutrients in the liquids;
- a conveying system such as a belt, a grip, an arm;
- food packaging, whereby the shelf life of the products in the packaging can be drastically increased by the antibacterial and/or antiviral layer. The packaged products hereby are preferably any of the following: beer, ketchup, mayonnaise, milk and dairy products, soft drinks;
- a food handling device, whereby the antibacterial and/or antiviral layer helps in avoiding cross contamination of the food;
- a liquid transportation system and/or a liquid storage tank, whereby an antibacterial and/or antiviral layer helps in avoiding cross contamination of the liquid;
- a tactile human user interface, such as a keyboard, a computer mouse, a touchscreen, a phone, a tablet. Hereby, the tactile component of such interface is preferably provided with an antibacterial and/or antiviral layer to avoid contamination
- technical textile and/or surgical textile used in hospitals or in similar working environments whereby an antibacterial and/or antiviral layer helps in reducing contamination.

The method of the present invention can also preferably be applied to a surface of any of the following:
- a medical device, preferably a reusable medical device, whereby an antibacterial and/or antiviral layer facilitates sterilization. Accumulation of material on medical devices can facilitate the spread of disease, and be a source of infection. This is also particularly preferred for an implantable medical device, whereby an antibacterial and/or antiviral layer decreases risks of infection. Examples of such implantable medical devices are implants, catheters, needles, pacemakers, implantable sensors, etc.;
- a surgical stitch, fiber or needle, whereby an antibacterial and antiviral layer prevents or decreases the risk of infection, thereby promoting and accelerating wound healing and limiting the spread of infection in wound areas;
- a wooden panel, which may be for indoor use or for outdoor use, and in particular a wooden panel with a surface having a high moisture exposure. An antibacterial and/or antiviral layer on the wooden panel increases protection for instance if it is used for a floor, a balcony, a terrace, a sauna;
- a public space surface, whereby an antibacterial and/or antiviral layer helps reducing the risk of disease spread. Antimicrobial and antiviral surfaces can help to reduce the risk of disease spread in highly populated places and areas where a high number of people are in contact with certain surfaces like doorknobs, handrails, elevator buttons, bathroom spaces, kitchens, thereby also reducing maintenance and cleaning frequency;
- a hospital surface or a caring facility surface, whereby an antibacterial and/or antiviral layer prevents disease spread. Antimicrobial and/or antiviral surfaces in hospitals, operating theatres, doctor practices, etc. limits the spread of infections in key exposure points;
- a garment, whereby an antibacterial and/or antiviral layer prevents microorganism proliferation. By preventing microorganism proliferation, clothing can be used more times in between washes, and also reduces odour after use because odour may at least partially be due to microorganism-induced reactions;
- tissues for surface cleaning, whereby a microbial collecting layer results in an efficient cleaning of surfaces in public spaces (bathrooms, handrails, doorknobs), hospitals, gyms, aircrafts, trains, buses, etc. Cleaning cloths for households may also be provided with a microbial collecting layer. Applying a microbial collecting layer on a cleaning cloth or tissue may prevent the need of an additional surface spraying;
- biological material collection devices, for instance swabs, whereby a microbial layer allows easy recovery of microorganisms for biological analysis. A high-affinity surface can thus be formed to enable efficient material collection for biological analysis and/or assays, and more efficient swab tests.

The bio-active layer is particularly preferably deposited, using the method of the present invention, on any of the following substrates:
- Personal protective equipment (PPE), such as preferably a mask, a blouse, a curtain, a glove, a shoe or shoe cover, glasses, a screen, an apron, an overall, a head cap,
- Hospital equipment, such as preferably a bed linen, a bed sheet, a curtain, a matrass, a wall, a wall of an operation room, a rejects box, a scalpel or scalpel blade, a containers, a box, a catheters external surface, a wound dressing, a towel, a dental disposable, a wipe, a cover sheets such as a surgical cover sheet,
- Substrates in industrial applications, such as preferably in a water treatment facility, a membrane, an air conditioning system or device, in a food processing facility,
- Lab equipment, such as preferably:
   - lab equipment packaging such as parafilm, a Petri dish,
   - Lab equipment disposables packaging, such as Eppendorf tips, well plates
- Transportation systems such as can be found on buses, train, planes, cars, etc, preferably seats, walls, sealing, hand rail
- Packaging with non-food contact surfaces, such as preferably a film, a can, a bottle, a tray, a paper cup,
- Substrates in public applications, such as a virtual reality mask, a cinema seat, wall paper, furniture, a diaper, a touch screen, a hand rail, a door knob, a button which can be found e.g. in elevators or buses, a garbage bag, a disposable towel or paper, a refrigerator part, a home air conditioning filter, a mosquito net, a suction nozzle such as can be found e.g. in toilets or bathroom or kitchen, a kitchen hood.

In an embodiment, the present invention can be applied to surfaces of containers, more preferably containers for biological liquids. Biological liquids may include food and beverages with a biological ingredient or coming from a biological source. Examples are wine, beer, milk, fruit juices, etc. Biological liquids may also include biological samples taken for analysis purposes, such as blood, saliva, naturally occurring water (from rivers, seas, natural sources, etc.), etc. The treated surfaces may be an inner surface of the container and/or an outer surface of the container.

Liquid containers are commonly made from a plastic, and preferably a thermoplastic material, such as polyethylene terephthalate (PET), polylactic acid (PLA), polyethylene 2,5-furandicarboxylate furanoate (PEF), polypropylene (PP) and polyethylene (PE). One typical way of producing such bottles is to first manufacture a preform, e.g. by injection moulding, and subsequently increase the preform to its full bottle size by a stretch blow process.

Preferably the coating layer is intact. An intact coating layer is defined as a coating layer which covers the entire surface onto which it was applied, without regions where the material of the surface onto which the coating layer was applied is exposed. In that way the bio-active properties of the preform or container onto which the coating layer is applied are determined by the properties of the coating layer. In order to confirm the presence of the intact coating layer with a thickness according to the invention, surface techniques, such as time of flight secondary ion mass spectrometry (TOF-SIMS), may be applied.

Preferably the coating layer is a conformal coating layer. Such a conformal layer follows closely the surface, even in case the surface comprises large curvatures.

The above functionalities may be desired for the complete substrate's surface, but may also be desired or needed only on a portion of the substrate's surface. Moreover, different portions of the substrate's surface may be desired to have different functionalities, or a different combination of functionalities. Hence, in embodiments of the present invention, different coatings may be applied on different portions of the substrate's surface. In embodiments, the plasma coating can be deposited on at least one section or over the whole surface of the substrate.

In an embodiment of the above methods, at least one precursor is administered in the plasma as a gas, as a liquid or as a solid, preferably as a gas or as a liquid in the form of an aerosol, most preferably as a liquid in the form of an aerosol.

A low-energy plasma is defined herein as a plasma of which the power density is high enough to activate the precursors, the substrate, allowing a chemical reaction to take place, but low enough to prevent destruction of the precursors, the substrate. The power density is preferably in the range of 0.2 W/I to 8W/I, more preferably between 0.5 W/I and 7 W/I, still more preferably between 0.8 W/I and 6 W/I, yet more preferably between 1 W/I and 5 W/I, even more preferably between 1.5 W/I and 4 W/I, still even more preferably between 2 W/I and 3 W/I, such as 2 W/I, 2.1 W/I, 2.2 W/I, 2.3 W/I, 2.4 W/I, 2.5 W/I, 2.6 W/I, 2.7 W/I, 2.8 W/I, 2.9 W/I, 3 W/I or any value therebetween, most preferably in the range of 2.4W/I to 2.6 W/I.

A cold plasma is defined herein as a plasma of which the temperature is sufficiently low to not melt or otherwise damage the precursor and/or substrate that are exposed to said cold plasma. The temperature of the plasma may preferably be 150°C or lower, more preferably 130 °C or lower, still more preferably 100 °C or lower, yet more preferably 70°C or lower, even more preferably 60°C or lower, yet more preferably 55°C or lower, still even more preferably 50°C or lower, even yet more preferably 45°C or lower. The temperature of the plasma may preferably be as low as room temperature, i.e., the temperature surrounding the plasma. Depending on the location where the coating process is carried out, room temperature may be in the range of 10 to 40 °C, preferably 15-30 °C, such as 20-25 °C. The temperature of the plasma will generally not be lower than room temperature.

When depositing temperature sensitive coatings it is important to keep the temperature of the plasma steady at the optimal value. Depending on the type of precursor or precursor mixture and/or the pressure, the optimal temperature may be selected. Hence, in an embodiment the temperature of the plasma is selected taking into account the type of precursor, the precursor mixture and/or the plasma pressure.

The plasma of the present invention is preferably an atmospheric plasma which has a pressure around ambient pressure. Such plasma is created and discharged at a pressure of between 400 and 1600 hPa, preferably at a pressure between 450 and 1400, even more preferably at a pressure between 500 and 1300 hPa, yet more preferably between 600 and 1250 hPa, even more preferably between 700 hPa and 1200 hPa, still more preferably between 800 hPa and 1150 hPa, yet more preferably between 900 hPa and 1100 hPa, most preferably about ambient pressure, which can typically be about 1013 hPa. Pressure of the plasma can play an important role in the quality of the deposited layer. Some plasma precursors are sensitive to too low and/or too high plasma pressures compared to the atmospheric pressure, while other precursors provide a better coating at lower or higher plasma pressures. However, note that low-energy, cold plasma can typically be applied under reduced pressure of lower than 400 hPa down to vacuum, or increased pressure of more than 1600 hPa, both types requiring a pressure vessel to maintain such low or high pressures. The use of a plasma with pressures in the currently preferred ranges around the ambient pressure reduces any costs and difficulties relating to maintaining pressure differences and pressure gradients.

In a preferred embodiment, the plasma is a dielectric barrier discharge plasma under atmospheric pressure.

The functionality of the layer may depend on the plasma conditions, e.g. temperature and pressure, in which the layer is deposited. The temperature and/or atmospheric conditions may therefore be selected taking into account the desired functionality of the coating layer.

In a preferred embodiment, the plasma gas is ionized by means of electrodes, whereby more preferably said plasma gas is ionized by said electrodes with a power of at most 10 Watt per cm² of the electrode surface, more preferably at most 9 W/cm², still more preferably at most 8 W/cm², even more preferably at most 7.5 W/cm². In many embodiments of the present invention, the power applied by the electrodes is minimally 1 W/cm², preferably minimally 2 W/cm², still more preferably minimally 2.5 W/cm². The power is most preferably between 2.5 and 7.5 W/cm².

In a preferred embodiment, the plasma gas comprises inert gas for at least 99 % by volume. The use of an inert gas as plasma gas essentially ensures that no reactions take place with the plasma gas and the equipment, between molecules of the plasma gas themselves, even not if temperature is increased. In fact, the lack of reactions also seems to allow to keep the processing temperature low, e.g. less than 50°C and preferably around room temperature. The low temperature of the plasma allows treatment of substrates made from a wide range of materials. Furthermore, this allows a better control over the formed coating and the adhesion properties thereof. Without wishing to be bound by theory, the inventors believe that the lack of reactive gas in the plasma gas ensures that none to very few chemical reactions with the plasma gas take place at the surface of the substrate, hence the better control over the adhesion properties. Also, if the plasma gas is nitrogen (N2) or is mainly comprised of N2, the low power applied to the plasma in embodiments of the present invention, are seen to result in very little to none nitrogen incorporated in the resulting coating. This is in stark contrast with the use of e.g. O2, NH3 or CH4 as a plasma gas, all of which are deemed reactive gasses, and all of which seem to leave more traces within the coating of the plasma gas, thereby leading to loss of control over the adhesion properties.

In a preferred embodiment, the precursor is added in a plasma gas afterglow. Hereby plasma gas flows over and between a plasma-inducing system, e.g. a set of electrodes. Downstream of the plasma-inducing system, a plasma gas afterglow is present, which comprises a large number of ionized plasma gas molecules which did not have the time to de-ionize. The precursor is preferably introduced in said plasma gas afterglow. As a result, the precursor does not need to be introduced in between e.g. electrodes which are used to ionize the plasma gas, and thus the electrodes may be kept clean for a long duration as the precursor cannot form a layer onto the electrodes.

In a preferred embodiment, said plasma gas comprises inert gas for at least 99 % by volume, i.e. 1 % by volume (vol.%) or less of the plasma gas is a reactive gas. More preferably at least 99.5 vol%, still more preferably at least 99.8 vol%, still more preferably at least 99.9 vol%, even more preferably at least 99.95 vol%, yet more preferably at least 99.99 vol% of the plasma gas is an inert gas. This means that the plasma gas preferably comprises 1 vol.% or less O2, more preferably at most 0.5 vol%, still more preferably at most 0.2 vol%, yet more preferably at most 0.1 vol%, still more preferably at most 0.05 vol%, even more preferably at most 0.01 vol% of O2. In the atmospheric plasma process of the present invention, this can for instance be achieved by using an overpressure with respect to ambient pressure, e.g. the plasma gas is delivered at a pressure of at least 1013mbar, preferably at least 1020mbar, more preferably at least 1030mbar, even more preferably at least 1040mbar, still more preferably at least 1050 mbar. Such slight overpressures allow to create an oxygen-poor and even oxygen-free zone in the plasma afterglow.

The atmospheric plasma coating process of the present invention allows both batch processes and inline processes. Hence, in an embodiment, the surface moves during step c and in another embodiment, the surface is static during step c. In yet another embodiment, the surface moves and remains static during step c according to a predetermined trajectory. This allows to provide e.g. a thicker coating on some portions of the surface and thinner coating on other portions of said surface.

In an embodiment of the invention, the plasma gas flow is between 1 and 1500 standard liter per minute ("slpm"), more preferably between 50 and 1500 slpm. 1 "slpm" is a liter of the gas at atmospheric pressure and at room temperature. More preferably the plasma gas flow is between 80 slpm and 1000 slpm. Preferably the plasma gas comprising the precursor is jettisoned from an outlet of a plasma jet nozzle. In a preferred embodiment, the plasma gas flow is determined taking into account a distance between the surface of the substrate and the outlet of a plasma jet nozzle. The larger such distance, the more plasma gas flow is required to ensure that the surface is subjected to a plasma without reactive gasses other than the used precursor. In particular, one can ensure that the plasma is essentially free of oxygen coming from e.g. the surrounding air.

In an embodiment of the present invention, the substrate undergoes a plasma pre-treatment step prior to being subjected to the plasma comprising the precursor. This is preferably performed in case of extremely inert surfaces, such as glass, silicon wafers, gold, high performance engineering thermoplastics or thermosets, etc. Hereby, the plasma pre-treatment preferably activates the surface of the substrate, i.e. it generates surface radicals, and may also preferably a least partially oxidize the surface, leading to an increased surface energy in most cases.

In preferred embodiments, the pre-treatment is performed:
- in an oxygen-rich plasma environment, more preferably using air or CO2 or other oxygen containing species,
- at higher power compared to the power used during the plasma gas ionization step a), and/or
- without the addition of chemical precursors.

In embodiments of the present invention, the coated substrate undergoes an atmospheric plasma post-treatment step. Preferably during this post-treatment step, the molecular weight of the plasma film is increased and/or the thermal stability of the plasma film is increased.

In preferred embodiments, the plasma post-treatment is performed:
- in absence of oxygen, using inert plasma gases, such as N2, Ar, of He (or mixtures thereof);
- at lower plasma power than the power used during the plasma gas ionization step a), and/or
- without the addition of chemical precursors.

The plasma chemically activates the precursors and/or the surface. This activation of the precursors and/or the surface may occur by double atomic bonds opening, radical removal and/or ion formation. This allows and/or improves the reactions required to form the coating layer. These reactions may involve:
- reactions between precursors, such as polymerization reactions and cross-linking reactions, and/or
- reactions between precursors and the surface, such as covalent bonding reactions. Preferably, the coating layer is covalently grafted to the surface.

In embodiments of the invention, the plasma coating has a thickness between 5 and 600 nm, preferably between 5 and 500 nm, more preferably between 10 and 500 nm, even more preferably between 10 and 300 nm, yet more preferably between 10 and 200 nm, still more preferably between 10 and 80 nm, such as 10 nm, 20 nm, 30 nm, 40 nm, 50 nm, 60 nm, 70 nm, 80 nm or any value therebetween, most preferably about 20 nm. The plasma coating thickness can be well-controlled by controlling the exposure time of the surface to the plasma and/or the precursors.

In a preferred embodiment, the processing temperature is at most 50°C, more preferably at most 40°C, still more preferably at most 30°C and most preferably around room temperature.

In a preferred embodiment, the processing temperature is controlled, more preferably by cooling electrodes used for ionizing the plasma gas. This can be e.g. water-cooled and/or air-cooled electrodes. Preferably the temperature of the electrodes is measured and/or the temperature of the substrate is measured in order to allow better control the temperature of the plasma gas. Typically this can be achieved by using a temperature control system, e.g. a PID controlling system, which allows to steer the cooling of the plasma, e.g. by cooling the electrodes, by checking how a predetermined desired processing temperature relates to the measured temperature. Preferably the temperature of the electrodes and of the substrate is measured and the temperature control system ensures that the processing temperature lies between the electrode temperature and the substrate temperature.

The plasma deposition process of the present invention is based on the simultaneous generation of surface radicals (i.e. activation of the difficult-to-treat substrate) and radicalized species in the plasma gas phase, leading to radical recombination reactions of the species to the substrate (i.e. grafting based on covalent bonding). The chemical nature of the precursor can range from classic monomers to saturated molecules, from organic to inorganic molecules, from low molecular weight (e.g. monomers, oligomers) to high molecular weight (e.g. polymers being dissolved or emulsified).

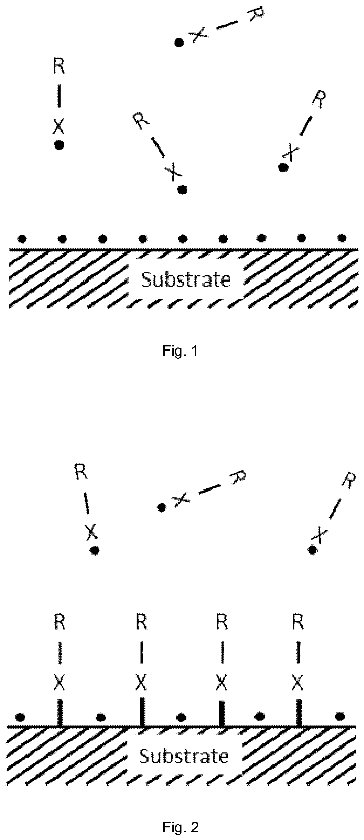

The scheme outlined in figures 1 to 4 indicate the different phases during the atmospheric plasma deposition process:
**Figure 1****:** at t=t0 the plasma is on. A precursor R-X is added to the plasma gas and the plasma is contacted with the surface of the substrate. Hereby the precursor R-X is radicalized, and the surface is activated.
**Figure 2****:** at t=t1 the plasma is on. Radical recombination reactions are taking place on the surface, resulting in a covalent bond between surface of the substrate and precursor.

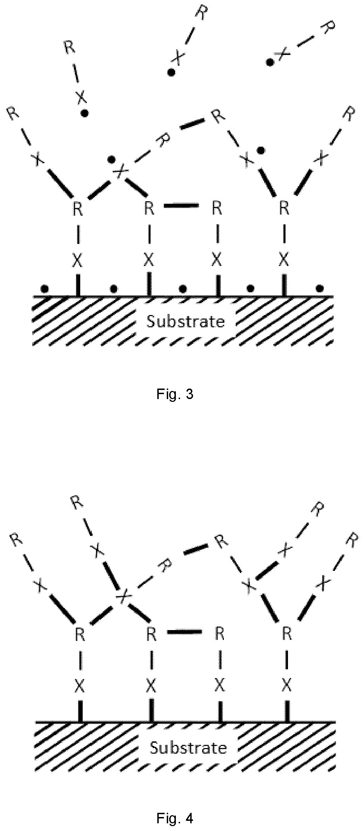

**Figure 3****:** at t=t2, the plasma is on. Film growth and thickness depend on treatment time. Also cross-linking is taking place.
**Figure 4****:** at t=t3 the plasma is off. After the plasma treatment, a functional plasma deposited film remains which is grafted onto the surface of the substrate.

In Step 1, the plasma is generated (can be based on direct or indirect plasma configurations, using an inert plasma gas such as N2, Argon, Helium, or any mixtures thereof), instantaneously generating radicalized species in the plasma gas phase. These species can be added to the plasma as a gas (or gas mixture), or a liquid (e.g. an aerosol, a spray, a liquid mixture, an emulsion, a dispersion, or polymer solution), preferably as a gas or as an aerosol. In the scheme outlined in figs. 1-4, we used the connotation "R-X" to denote the initial precursor, and "R-X•" the radicalized form of the precursor. "R" being the targeted functionality, and "X" being a part of the molecule being able to be radicalized. For example, "X" can be reactive (such as C=C double bonds, C=O, epoxy, isocyanate,...), but can also be unreactive (i.e. saturated), in this specific case, the radical will be formed based on hydrogen abstraction or any other single bond scission.

In addition to the radicalized species in the gas phase, also surface radicals are formed on the surface of the substrate which is also in contact with the plasma. The generation of these surface radicals can be mainly based on hydrogen abstraction or breaking of covalent bonds located at the surface of the substrate.

In Step 2, radical recombination reactions are taking place between the radicalized species and surface radicals. This radical recombination reaction results in a permanent grafting of the precursor to the surface by the formation of a covalent bond. It must be remarked that presence of reactive gasses such as O2, needs to be avoided during this phase.

In Step 3, film growth is taking place by the continuous incorporation of species by radical recombination. It must be remarked that the plasma process is 'non-specific', meaning that a specific precursor can be built in on the surface on any location, leading to a heterogeneous conformation of the plasma deposited film on a molecular level. Furthermore, the film growth can take place in a 'continuous' plasma or in a 'pulsed' plasma process. This pulsed plasma has a specific plasma off time, where recombination reactions are favoured, similar to propagation in conventional polymer synthesis.

In the final phase of the plasma deposition process (Step 4), the plasma is switched off, or similarly the substrate has left the plasma afterglow zone, leading to a fully functional coating layer which is covalently linked to the surface of the substrate.

The resulting plasma deposited film has the following unique features:
- *Covalently bonded* to the surface of the substrate;
- *Bio-active, for instance:*
   (i) adhesion of proteins, bacteria, viruses and/or funghi to the surface is decreased;
   (ii) proliferation of microbial material adherent to the surface is decreased or inhibited
   (iii) having the capacity to destroy or inactivate proteins, bacteria, viruses and/or funghi upon contact with the surface, and/or
   (iv) microbial material can be collected (i.e. immobilized) on the surface.
- *Heterogeneous:*

Compared to polymeric analogues having a distinct repeat unit, the plasma deposited film is heterogeneous in nature. This means that besides a main carbon chain in the polymeric backbone, also other elements can be incorporated (originating from the introduced precursor).

### • Cross-linked:

During the film growth phase of the plasma deposited film, also radical sites are generated on the surface of the growing film itself. These radical sites are created randomly, leading to the creation of cross-links.

### • High molecular weight:

The molecular weight of the fully functional plasma deposited film is high (comparable to conventional thermosets), due to the cross-linked nature of the film. It must be remarked that the presence of O₂ needs to be avoided in the treatment area of the plasma process. When there is a significant amount of O₂ present (> 100 ppm), radical recombination reactions will be quenched, leading to low molecular weight fragments residing in the plasma deposited film, having a plasticizing effect. Hence, in most preferred embodiments, the plasma gas comprises at most 0.01 vol% O2.

### • Durable:

Due to the cross-linked nature and high molecular weight of the plasma deposited film, the durability of the film is greatly enhanced compared to conventional primers. Overall, it was tested that the time between the plasma deposition process and the application of an adhesive or topcoat can be extended to a period of minimum 6 months.

### • Dry:

After the plasma deposition process, the resulting film does not require any subsequent drying step. A subsequent curing step may also not be necessary, but may lead to improvement of the molecular weight of the film.

An apparatus for providing a coating layer onto a surface, in accordance with the present invention, can be found in European patent application no. EP18179354.8 filed on 22 June 2018 and in International patent application no. PCT/EP2019/066647 filed on 24 June 2019, both of which are incorporated. Such apparatus and the methods described in these documents can be used to provide the coating layer discussed in the present document.

The coating layer can be provided using an apparatus for depositing a coating via an atmospheric pressure plasma jet, the apparatus comprising:
- a plasma jet generator comprising a jet outlet; and
- a nozzle comprising an adaptor and a shield, preferably a replaceable shield, the shield comprising a jet inlet, a nozzle outlet and a sidewall extending from the jet inlet to the nozzle outlet, wherein the adaptor is preferably configured for detachably attaching the shield onto the plasma jet generator and thereby communicatively coupling the jet outlet and the jet inlet.

Preferably, the shield comprises at the jet inlet a flange attached to the sidewall, and wherein the adaptor comprises a retaining wall comprising an opening with size and shape adapted for retaining the flange.

Preferably, the shield is monolithic.

Preferably, the shield comprises an insulating material. More preferably, the shield comprises, and preferably is made of, a polymer material.

Preferably, the nozzle outlet of the shield comprises a non-planar edge.

Preferably, the jet outlet comprises an opening, and the jet inlet comprises an opening larger than the opening of the jet outlet.

Preferably, the sidewall comprises a tapering portion.

Preferably, the sidewall of the shield comprises at least one precursor inlet.

Preferably, the nozzle comprises a homogenization means, preferably the shield comprising flow disturbance elements.

Preferably, the nozzle is adapted for cooling, preferably the sidewall of the shield comprising a channel for passage of a cooling fluid.

Preferably, the nozzle outlet of the shield comprises an edge, and the apparatus is configured for maintaining said edge at a distance of at least 0.1 mm and at most 5 mm, preferably at least 0.2 mm and at most 2 mm, more preferably at least 0.5 mm and at most 1 mm, of said surface of said substrate.

The biological pathogen transfer inhibiting properties of the bio-active layer were tested for a multitude of precursor. The testing below was performed using Bacteriophage MS2. Bacteriophage MS2 is a 275 Å RNA virus that infects Escherichia coli. Because of its small size, relatively simple composition and ease of growth, MS2 is used as a model organism for a number of macromolecular processes including viral replication, translation, infection, and assembly. Increasingly due to its ease of purification, harmlessness to man, and durability, MS2 is also used as a quantitative marker for the effectiveness of antiviral and antiseptic agents, and the efficiency of water treatment plants and filtration devices. Additionally, genetically modified forms of MS2 are available for vaccine development and for use as clinical diagnostic tools. Testing on MS2 is commonly used to look at the effects a procedure has on enveloped viruses in general. In the present case, the test involves subjecting a substrate having a bio-active layer deposited using a method according to the present invention, to MS2 contamination.

The tests were perform at the LIST (Luxembourgish Institute for Science and Technology).

The viral load reduction test was performed according to the ASTM E2721-16 standard. The Influenza A virus which is proposed in ASTM E2721-16 was replaced as model by another virus: MS2. MS2 is a bacteriophage preventing any biosafety risk during testing. Results on the virucidal activity are obtained faster (24 h) than with Influenza A (3-4 days). MS2 are naked viruses used in other standards regarding virucidal effects (e.g. EN 14476 - Quantitative suspension test for the evaluation of virucidal activity in the medical area).

The test involved a validation part and a data gathering part. In the control part, MS2 phages were sprayed on an untreated substrate's surface, i.c. the surface of a PPE mouth mask. Recovery of MS2 phages is obtained by rinsing the substrate, i.c. the PPE mouth mask. The data gathering part involves a treatment step prior to the spraying and rinsing step also used in the control part. The treatment step hereby entails performing the method of the present invention for a number of embodiments. The effects can be obtained by comparing the results of the data gathering part with those of the validation part.

In terms of infection control, 'Log Reductions' convey how effective a product is at reducing pathogens. The greater the log reduction the more effective the product is at killing bacteria and other pathogens that can cause infections.

During product efficacy testing, microbiology laboratories count the number of colony forming units (CFUs) in the case of bacterial testing or plaque forming units (PFUs) in case of viruses present at the start of the test. The tests are performed on a treated substrate being tested, alongside a control substrate and wait the required test time before counting the number of CFUs or PFUs present.

The result of the difference between the control and the test substrate is then expressed as a Log reduction. For example, if the number of CFUs in the control was found to be 1,000,000 (or 10⁶) and the end result using the product was only 1,000 (10³), that would be a Log reduction of 3 or a reduction of 99.9%.

The results of the tested precursors on Tyvek® substrates are summarized in the table below:

| Precursor or precursor mixture | CAS No. | EPA Covid | EPA Safer Chemical List | **LOG Reduction** |
|---|---|---|---|---|
| Citric Acid (pH mod.) | 77-92-9 | Yes | Yes | > **5.0 (LOD)** |
| Benzal | 63449-41-2 | Maybe | No | > **3.8 (LOD)** |
| Antibak Residual | 68439-45-2 141-43-5 7173-51-5 68424-85-1 | No | No | **> 2.9 (LOD)** |
| APTAC | 45021-77-0 | Maybe | No | **2.1** |
| SiQAM | 27668-52-6 | Maybe | No | **1.56** |
| Chitosan | 9012-76-4 | No | Yes | **2.6** |
| Gold nanoparticle AuNP (additive) | CAS No. 7440-57-5 | No | No | **> 2.9 (LOD)** |
| CuO (additive) | 1317-38-0 | No | No | **> 3.8 (LOD)** |

| | | | | |
|---|---|---|---|---|
| Herein, "LOD" refers to "Limit Of Detection" of the testing method. "EPA Safer Chemical List" refers to whether the compound can be found in the Safer Chemical Ingredients List of the Environmental Protection Agency. "EPA Covid" refers to a list of compounds which are deemed effective against the Sars-Cov-2 virus and the Covid-19 disease. Tyvek® is a 100% synthetic material made from high-density spunbound polyethylene fibers. Tyvek® is commonly used in many applications, in particular in personal protective equipment. Antibak Residual comprises ethoxylated C6-C12 alcohols, 2-aminoethanol, Didecyldimethylammonium chloride and N-benzyl-N,N-dimethyltetradecan-1-aminium chloride (CAS numbers provided in the table). ATAC refers to 2-(Dimethylamino)ethyl acrylate, methyl chloride quaternary salt. APTAC refers to (3-Acrylamidopropyl)trimethylammonium chloride which is preferably in solution. | | | | |

## Claims

1. Method for providing a bio-active layer on a surface, comprising the steps of:
a) ionizing a plasma gas at low temperature and at about atmospheric pressure, thereby creating a plasma;
b) introducing a precursor into said plasma;
c) exposing the surface to said plasma comprising said precursor, thereby forming a coating onto said surface,
**characterised in that** the precursors comprise a biological pathogen transfer inhibiting compound.

2. Method according to claim 1, wherein the biological pathogen transfer inhibiting compound is a biological pathogen inactivation compound and/or a biological pathogen immobilisation compound.

3. Method according to any of the preceding claims, wherein the precursors comprise a molecule comprising of at least one moiety having the characteristic of covalently binding with said biological pathogen, preferably the linking molecule comprises two moieties, more preferably the two moieties are not located alongside each other.

4. Method according to any of the preceding claims wherein the precursors comprise any or any combination of the following compounds:
.alpha.,.alpha.',.alpha."-trimethyl-1,3,5-triazine-1,3,5(2H,4H,6H)triethanol (HPT), Propan-1-ol, Propan-2-ol, 2-Phenoxyethanol, Biphenyl-2-ol, Chlorocresol, Clorophene, 5-chloro-2-(4-chlorphenoxy)phenol (DCPP),
D-gluconic acid, compound with N,N"-bis(4-chlorophenyl)-3,12-diimino2,4,11,13-tetraazatetradecanediamidine (2:1) (CHDG),
6-(phthalimido)peroxyhexanoic acid (PAP), Citric Acid, Formic Acid, Glycollic Acid, L-(+)-lactic acid, Peracetic acid, Salicylic Acid, Nonanoic Acid,
Alkyl (C12-18) dimethylbenzyl ammonium chloride (ADBAC (C12-18)),
Alkyl (C12-C14) ethylbenzylammonium chloride (ADEBAC (C12-C14)), Didecyldimethylammonium chloride (DDAC), Dimethyloctadecyl[3-(trimethoxysilyl)propyl] ammonium chloride,
Quaternary ammonium compounds, benzyl-C12-18-alkyldimethyl, salts with 1,2-benzisothiazol-3(2H)-one 1,1-dioxide (1:1) (ADBAS),
N-(3-aminopropyl)-N-dodecylpropane-1,3-diamine (Diamine), Gluteraldehyde, Glyoxal, Cinnamaldehyde,
3-phenyl-propen-2-al (Cinnamic aldehyde), Sodium dichloroisocyanurate dihydrate, Sodium N-chlorobenzenesulphonamide (Chloramine-B), Symclosene, Bromochloro-5,5-dimethylimidazolidine-2,4-dione (BCDMH/ Bromochlorodimethylhydantoin),
Tosylchloramide sodium (Tosylchloramide sodium - Chloramin T),
Troclosene sodium,
Mixture of 5-chloro-2-methyl-2H-isothiazol-3-one (EINECS 247-500-7) and 2-methyl-2H-isothiazol-3-one (EINECS 220-239-6) (Mixture of CMIT/MIT),
Monolinuron, Pentapotassium bis(peroxymonosulphate) bis(sulphate),
Pyridine-2-thiol 1-oxide, sodium salt (Sodium pyrithione), Bronopol, Copper, 1,2-benzisothiazol-3(2H)-one (BIT),
3,3'-methylenebis[5-methyloxazolidine] (Oxazolidin/MBO),
Amines, N-C10-16-alkyltrimethylenedi-, reaction products with chloroacetic acid (Ampholyt 20).

5. Method according to claim 4, wherein the precursors comprise citric acid.

6. Method according to any of the preceding claims, wherein the precursors comprise Hydantoin (with CAS no. 461-72-3) or hydantoin derivatives.

7. Method according to any of the preceding claims, wherein the precursors comprise 1-Bromo-3-chloro-5,5-dimethylhydantoin.

8. Method according to any of the preceding claims, wherein said plasma is created and discharged at a temperature between 10 and 130°C, preferably around room temperature, and/or wherein said plasma is created and discharged at a pressure between 500 and 1300 hPa.

9. Method according to any of the preceding claims, whereby said plasma gas comprises inert gas for at least 99 % by volume.

10. Method according to any of the preceding claims, whereby said plasma gas comprises O2 for at most 1% by volume.

11. Method according to any of the preceding claims, whereby said inert gas is a noble gas, preferably Ar or He or whereby said inert gas is a non-noble gas, preferably N2.

12. A method according to any of the preceding claims, whereby said plasma gas is ionized by means of electrodes, preferably whereby said plasma gas is ionized by said electrodes with a power of at most 10 Watt per cm² of the electrode surface.

13. Method according to any of the preceding claims, wherein the precursor is administered in the plasma as a gas, as a liquid or as a solid, preferably as a gas or as a liquid in the form of an aerosol, most preferably as a liquid in the form of an aerosol.

14. Method according to any of the preceding claims, comprising the step of bringing the bio-active layer into contact with the biological pathogen, thereby inactivating said biological pathogen and/or immobilizing said biological pathogen.

15. Surface comprising a biological pathogen transfer inhibiting layer obtained using a method according to any of the claims 1 to 14.
